# EUROPÄISCHE PATENTSCHRIFT

(11) **EP 3 133 447 B1**
(45) Veröffentlichungstag und Bekanntmachung des Hinweises auf die Patenterteilung: **22.09.2021**
(21) Anmeldenummer: 16174538.5
(22) Anmeldetag: 15.06.2016
(51) Int. Cl.: G05B 9/03

(54) **SICHERHEITSSCHALTER**
SAFETY SWITCH
COMMUTATEUR DE SECURITE

(30) Priorität: 06.08.2015 DE 102015112995
(43) Veröffentlichungstag der Anmeldung: 22.02.2017
(73) Patentinhaber: EUCHNER GmbH + Co. KG, 70771 Leinfelden-Echterdingen (DE)
(72) Erfinder: Kraus, Matthias, 73760 Ostfildern (DE); Hörtling, Markus, 70771 Leinfelden-Echterdingen (DE); Schmid, Monika, 72663 Großbettlingen (DE); Siefert, Timo, 70771 Leinfelden-Echterdingen (DE); Schmid, Dominik, 72663 Großbettlingen (DE); Rothenburg, Jens, 72622 Nürtingen (DE)
(74) Vertreter: Ruckh, Rainer Gerhard

(56) Entgegenhaltungen:
- EP-A1- 2 309 351
- EP-A2- 1 363 306
- DE-A1-102012 204 763
- DE-U1-202010 009 357
- None

## Beschreibung

Die Erfindung betrifft einen Sicherheitsschalter und eine Reihenschaltung mit Sicherheitsschaltern.

Sicherheitsschalter werden im Bereich der Sicherheitstechnik eingesetzt, wobei diese insbesondere zur Gefahrenbereichsabsicherung an Maschinen und Anlagen eingesetzt werden.

Beispielsweise können derartige Sicherheitsschalter mit Transpondern arbeiten, wobei anhand der Transpondersignale erkannt werden kann, ob eine Tür oder dergleichen als Zugang zu einer Maschine oder Anlage geschlossen ist oder nicht.

Ein derartiger Sicherheitsschalter weist typischerweise eine redundante Eingangsstruktur bestehend aus zwei Eingängen und eine redundante Ausgangsstruktur mit zwei Ausgängen auf. Der Sicherheitsschalter generiert entsprechend seiner Überwachungsfunktion, insbesondere in Abhängigkeit des Transpondersignals ein Schaltsignal, das an eine Steuerung ausgegeben wird, mit dem die zu überwachende Maschine gesteuert wird. Wird mit dem Sicherheitsschalter ein gefahrloser Zustand detektiert, insbesondere, dass eine zu überwachende Tür geschlossen ist, wird ein Schaltsignal mit dem Schaltzustand "eingeschalteter Zustand", entsprechend einer aktiven Sichcrheitsbcdingung, das heißt einem Frcigabesignal generiert. Empfängt die Steuerung vom Sicherheitsschalter dieses Freigabesignal, kann die Steuerung die Maschine in Betrieb nehmen beziehungsweise in Betrieb lassen. Wird mit dem Sicherheitsschalter jedoch eine offene Tür registriert, generiert dieser ein Schaltsignal mit dem Schaltzustand" ausgeschalteter Zustand", entsprechend einer nicht aktiven Sicherheitsbedingung. In diesem Fall schaltet der Sicherheitsschalter zur Vermeidung gefahrbringender Zustände die Maschine aus.

Generell kann auch eine Reihenschaltung von derartigen Sicherheitsschaltern vorgesehen sein, insbesondere um komplexe Gefahrenbereiche zu überwachen.

Um einen gefahrbringenden Zustand bei einer solchen Reihenschaltung sicher auszuschließen, ist deren Funktion derart, dass dann, wenn ein Sicherheitsschalter ein Schaltsignal mit dem Schaltzustand "ausgeschalteter Zustand" ausgibt, dieser Schaltzustand über alle nachfolgenden Sicherheitsschaltern bis zur Steuerung durchgeschleift wird, so dass die Steuerung anhand dieses Schaltsignals die Maschine in den sicheren, das heißt ausgeschalteten Zustand überführt.

Ein derartiger Sicherheitsschalter, der in einer Reihenschaltung einsetzbar ist, ist der Sicherheitsschalter des Typs CES-AR der Firma Euchner GmbH + Co. KG. Dieser Sicherheitsschalter wird im Folgenden Standard-Sicherheitsschalter genannt.

Ein wesentliches Merkmal dieses Standard-Sicherheitsschalters besteht darin, dass dieser an seinen Ausgängen Testpulse ausgibt und zwar sowohl dann, wenn über die Ausgänge ein Schaltsignal mit dem Schaltzustand "eingeschalteter Zustand" ausgegeben wird, als auch wenn ein Schaltsignal mit dem Schaltzustand "ausgeschalteter Zustand" ausgegeben wird. Diese Testpulse werden nicht nur zur Überprüfung der Schaltfähigkeit der Ausgänge des jeweiligen Standard-Sicherheitsschalters verwendet.

Die EP 2 309 351 A1 betrifft eine Sicherheitssteuerung mit Anschlüssen für Signalgeber, einer Auswerteeinheit zur Auswertung von an den Anschlüssen anliegenden Signalgebersignalen, wenigsten einem Sicherheitsschaltausgang und mit einer Betriebsarteneinstelleinheit, die die Betriebsart der Sicherheitssteuerung einstellt. Die Betriebsarteneinstelleinheit weist eine Eingangssignalerkennungseinheit auf, mit der die Betriebsarteneinstelleinheit erkennen kann, welche Art Signalgeber mit den Anschlüssen verbunden ist oder sind.

Der Erfindung liegt die Aufgabe zugrunde, einen Sicherheitsschalter und eine Reihenschaltung mit Sicherheitsschaltern bereitzustellen, welche bei geringem konstruktivem Aufwand eine hohe Funktionalität aufweisen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Sicherheitsschalter mit einer redundanten Eingangsstruktur und mit einer redundanten Ausgangsstruktur. Der Sicherheitsschalter ist für eine Integration in einer Reihenschaltung von SicherheitsSchaltern ausgebildet, wobei der Sicherheitsschalter Mittel zur Erkennung und Einstellung der Betriebsart innerhalb der Reihenschaltung aufweist. Der Sicherheitsschalter ist für einen Austausch in der Reihenschaltung während deren Betriebs ausgebildet. Der Sicherheitsschalter generiert ein binäres Schaltsignal, welches über die redundante Ausgangsstruktur ausgegeben wird. Das Schaltsignal weist als ersten Schaltzustand einen eingeschalteten Zustand entsprechend einer aktiven Sicherheitsbedingung beziehungsweise einem Freigabesignal und als einen zweiten Schaltzustand einen ausgeschalteten Zustand entsprechend einer nicht aktiven Sicherheitsbedingung auf. Nur im eingeschalteten Zustand werden Testpulse über die redundante Ausgangsstruktur ausgegeben, wobei mit den Testpulsen die Schaltfähigkeit der redundanten Ausgangsstruktur getestet wird. Die redundante Ausgangsstruktur ist von zwei Ausgängen (OA, OB) und die redundante Eingangsstruktur von zwei Eingängen (IA, IB) gebildet. Ein erster Ausgang und ein erster Eingang bilden einen ersten Kanal und ein zweiter Eingang und ein zweiter Ausgang bilden einen zweiten Kanal. Durch Rücklesen der Testpulse an einem Ausgang eines Kanals auf den jeweils anderen Kanal wird die Schaltfähigkeit dieses Ausgangs getestet.

Der erfindungsgemäße Sicherheitsschalter, der im Folgenden in Abgrenzung zu dem eingangs genannten, bekannten Standard-Sicherheitsschalter lediglich Sicherheitsschalter (ohne Zusatzbezeichnung) genannt wird, weist gegenüber diesem bekannten Standard-Sicherheitsschalter eine wesentlich erhöhte Funktionalität auf.

Generell kann der Sicherheitsschalter in einer Einzelanordnung eingesetzt werden. Da der Sicherheitsschalter gemäß der vorliegenden Erfindung selbsttätig Betriebsarten in einer Reihenschaltung erkennen und diese selbsttätig entsprechend einstellen kann, wird eine besonders flexible Einsatzmöglichkeit des Sicherheitsschalters in unterschiedlichen Reihenschaltungen ermöglicht.

Besonders vorteilhafthaft ist, dass bei einer Reihenschaltung von erfindungsgemäßen Sicherheitsschaltern ein Sicherheitsschalter während des Betriebs der Reihenschaltung ausgetauscht werden kann, und zwar unabhängig davon, welches Schaltsignal dieser Sicherheitsschalter gerade ausgibt.

Wird ein Sicherheitsschalter aus der Reihenschaltung entnommen, erhält der nächste Sicherheitsschalter kein Spannungssignal mehr, das dem Schaltzustand "ausgeschalteter Zustand" entspricht. Da in diesem Schaltzustand keine Testpulse ausgesendet werden, wartet der nächste Sicherheitsschalter auch nicht auf Testpulse, so dass die Entnahme des Sicherheitsschalters unkritisch ist.

Generell wird mit den Testpulsen die Schaltfähigkeit der redundanten Ausgangsstruktur getestet.

Erfindungsgemäß ist die redundante Ausgangsstruktur von zwei Ausgängen und die redundante Eingangsstruktur von zwei Eingängen gebildet, wobei ein erster Ausgang und ein erster Eingang einen ersten Kanal bilden und ein zweiter Eingang und ein zweiter Ausgang einen zweiten Kanal. Durch Rücklesen der Testpulse wird an einem Ausgang eines Kanals auf den jeweils anderen Kanal die Schaltfähigkeit dieses Ausgangs getestet.

Dabei ist der erfindungsgemäße Sicherheitsschalter ausgebildet, über die redundante Ausgangsstruktur Testpattern auszugeben und über die redundante Eingangsstruktur Testpattern zu empfangen.

Dabei werden Testpattern während eines Power-UP und ansonsten nur im eingeschalteten Zustand des Sicherheitsschalters ausgegeben.

Mit der Aussendung von Testpattern wird die Funktionalität des Sicherheitsschalters erheblich erweitert.

Insbesondere ist über Testpattern die Position eines Sicherheitsschalters in einer Reihenschaltung vorgebbar, identifizierbar und unterscheidbar.

Weiter vorteilhaft ist über Testpattern die Betriebsart des Sicherheitsschalters vorgebbar.

Insbesondere werden die Testpattern für einen Austausch eines Sicherheitsschalters in einer Reihenschaltung genutzt.

Wird dann der neue Sicherheitsschalter in die Reihenschaltung eingesetzt, erhält er vom vorhergehenden Sicherheitsschalter über dessen Testpattern seine Position mitgeteilt und kann dann für den nächsten Sicherheitsschalter sein Testpattern in der Reihenschaltung generieren.

Generell besteht jedes Testpattern aus einer Folge von Einzelpulsen.

Gemäß einer vorteilhaften Ausgestaltung weist der erfindungsgemäße Sicherheitsschalter Mittel zur Parametrierung auf.

Erfindungsgemäß kann mit den Sicherheitsschaltern eine Reihenschaltung realisiert werden.

Generell ist hierbei die redundante Eingangsstruktur des ersten Sicherheitsschalters der Reihenschaltung mit einem Brückenstecker verbunden. Das Schaltsignal des letzten Sicherheitsschalters der Reihenschaltung ist über dessen redundante Ausgangsstruktur einer Steuerung zugeführt.

Dabei wird für den Fall, dass einer der Sicherheitsschalter über seine redundante Ausgangsstruktur ein Schaltsignal mit dem Schaltzustand "ausgeschalteter Zustand" ausgibt, dieser Schaltzustand über die nachfolgenden Sicherheitsschaltern der Reihenschaltung zur Steuerung durchgeschleift.

Gemäß einer ersten Variante der Erfindung sind in der Reihenschaltung keine Standard-Sicherheitsschalter, sondern nur Sicherheitsschalter vorgesehen, wobei diese entsprechend ihrer Spezifikation kurze Testpulse und Testpattern aussenden.

In diesem Fall sind durch die von den Sicherheitsschaltern generierten und den jeweils nächsten Sicherheitsschalter zugeführten Testpattern die Positionen der einzelnen Sicherheitsschaltern in der Reihenschaltung bekannt und festgelegt. Die Sicherheitsschalter senden dabei die Testpattern wie auch die Testpulse nur dann aus, wenn der jeweilige Sensor ein Schaltsignal mit dem Schaltzustand "eingeschalteter Zustand" ausgibt. Damit kann während des Betriebs der Reihenschaltung ein Sicherheitsschalter ausgetauscht werden, wobei der neu in diese Reihe eingesetzte Sicherheitsschalter vom vorigen Sicherheitsschalter über die Testpattern seine Position in der Reihe mitgeteilt bekommt und dann mit den Sicherheitsschaltern in der Reihe kommunizieren kann.

Gemäß einer ersten Alternative ist das Schaltsignal des letzten Sicherheitsschalters der Reihenschaltung direkt der Steuerung zugeführt.

Gemäß einer zweiten Alternative ist das Schaltsignal des letzten Sicherheitsschalters der Reihenschaltung über ein Auswertegerät der Steuerung zugeführt, wobei hierzu die Ausgänge des letzten Sicherheitsschalters an jeweils einen Eingang des Auswertegeräts angeschlossen sind.

Dabei ist das Auswertegerät über ein Kommunikationssystem mit den Sicherheitsschaltern der Reihenschaltung verbunden.

Mit dem Auswertegerät wird somit ein weiterer Kommunikationskanal bereitgestellt, mit dem ein Datenaustausch mit den Sicherheitsschaltern der Reihenschaltung ermöglicht wird. Über diesen Kommunikationskanal können nicht sicherheitsrelevante Daten und sicherheitsrelevante Daten übertragen werden.

Generell werden über das Auswertegerät den Sicherheitsschaltern Positionen zugewiesen, unter welchen nachfolgend die Sicherheitsschalter vom Auswertegerät angesprochen werden.

Dabei kann die Positionsvergabe für die Sicherheitsschalter einerseits über das Auswertegerät und die Kommunikationsleitungen des Kommunikationssystems erfolgen. Alternativ kann die Positionsvergabe auch derart erfolgen, dass das Auswertegerät über seine Eingänge Positionsinformationen an die Ausgänge der redundanten Ausgangsstrukturen der Sicherheitsschalter ausgibt.

Gemäß einer zweiten Variante der Erfindung ist in der Reihenschaltung neben einem oder mehreren Sicherheitsschaltern wenigstens ein Standard-Sicherheitsschalter vorhanden, wobei sich der Standard-Sicherheitsschalter von dem Sicherheitsschalter dadurch unterscheidet, dass dieser Testpulse aussendet, wenn sich das Schaltsignal im Schaltzustand "eingeschalteter Zustand" befindet und wenn sich das Schaltsignal im Schaltzustand "ausgeschalteter Zustand" befindet.

Der Standard-Sicherheitsschalter ist während des Betriebs der Reihenschaltung nicht austauschbar.

In diesem Fall werden die in der Reihenschaltung vorhandenen erfindungsgemäßen Sicherheitsschalter in einem Kompatibilitätsmodus betrieben, in welchem sich diese Sicherheitsschalter exakt wie Standard-Sicherheitsschalter verhalten. Dabei passen die Sicherheitsschalter selbsttätig ihre Betriebsart an die in der Reihenschaltung vorhandenen Sicherheitsschalter an, so dass eine hohe Funktionalität der Reihenschaltung erhalten wird.

Vorteilhaft wird die Betriebsart der Sicherheitsschalter in der Reihenschaltung selbsttätig während eines Power-UP festgelegt.

Die Einstellung des Sicherheitsschalters in der Betriebsart Kompatibilitätsmodus erfolgt dadurch, dass dieser von seinem Vorgänger in der Reihenschaltung Testpulse entsprechend der Spezifikation eines Standard-Sicherheitsschalters empfängt.

In diesem Fall gibt der dem Erstgerät zugeordnete Brückenstecker ein Spannungsniveau vor, welches einem "High" Pegel der Eingänge des Standard-Sicherheitsschalters entspricht, das heißt der Brückenstecker bildet ein passives Element. Für den Fall, dass ein Sicherheitsschalter als Erstgerät in der Reihenschaltung vorgesehen ist, ist diesem ein aktiver Brückenstecker zugeordnet, welcher Testpulse eines Standard-Sicherheitsschalters ausgibt, wobei durch Erfassen dieser Testpulse die Sicherheitsschalter im Kompatibilitätsmodus betrieben sind.

In diesem Fall wird durch den Brückenstecker als aktivem Element die Betriebsart der Sicherheitsschalter im Kompatibilitätsmodus vorgegeben.

Bei einer Reihenschaltung, in der Standard-Sicherheitsschalter vorhanden sind und damit die in der Reihenschaltung vorhandenen Sicherheitsschalter im Kompatibilitätsmodus betrieben werden, generieren alle Teilnehmer der Reihe Testpulse entsprechend der Spezifikation von Standard-Sicherheitsschaltern, deren Pulsdauer länger ist als die eines Testpulses eines erfindungsgemäßen Sicherheitsschalters.

Um der der Reihe von Sicherheitsschaltern von Standard-Sicherheitsschaltern nachgeordneten Steuerung dennoch kurze Testpulse gemäß der Spezifikation von erfindungsgemäßen Sicherheitsschaltern zuzuführen, kann dann, wenn der letzte Teilnehmer der Reihe ein erfindungsgemäßer Sicherheitsschalter ist, dieser entsprechend parametriert beziehungsweise konfiguriert werden.

Die Erfindung wird im Folgenden anhand der Zeichnungen erläutert. Es zeigen:
- Figur 1a:: Erstes Beispiel einer Reihenschaltung mit einer Mehrfachanordnung von erfindungsgemäßen Sicherheitsschaltern.
- Figur 2a:: Schematische Darstellung der Übertragung von Testpulsen zwischen Sicherheitsschaltern der Reihenschaltung gemäß Figur 1a.
- Figur 2b:: Schematische Darstellung der Übertragung von Testpattern zwischen Sicherheitsschaltern der Reihenschaltung gemäß Figur 1a.

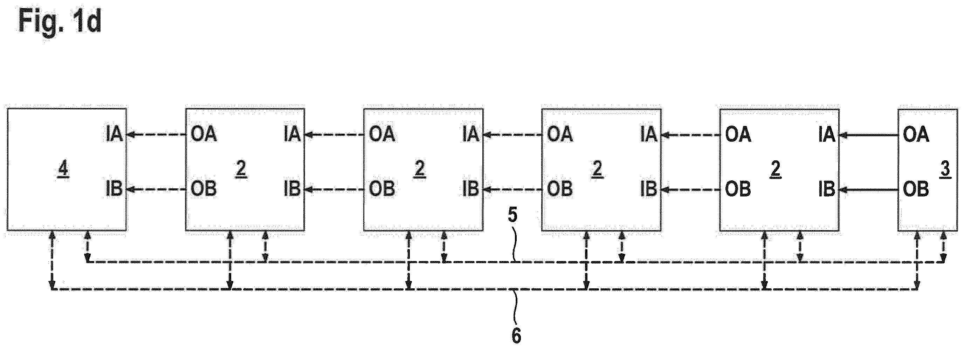

- Figur 1d:: Zweites Beispiel einer Reihenschaltung mit einer Mehrfachanordnung von erfindungsgemäßen Sicherheitsschaltern mit einem Auswertegerät.

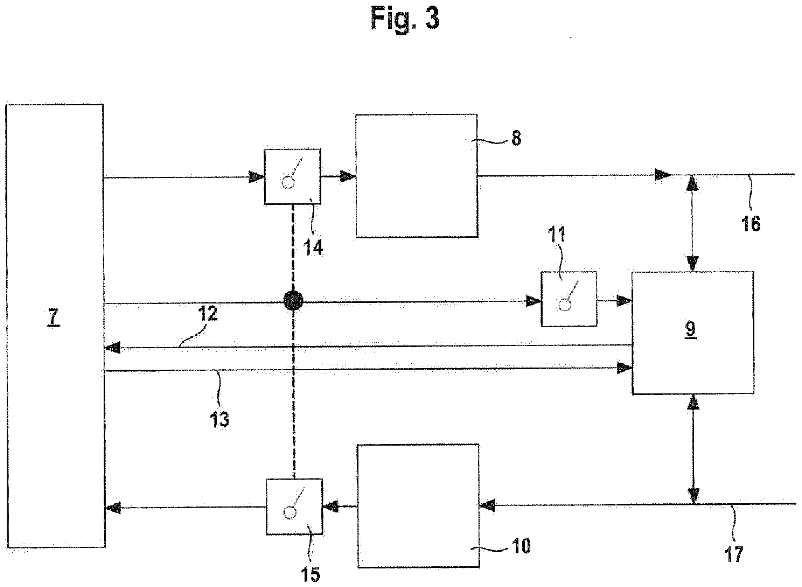

- Figur 3:: Schaltungsanordnung eines Sicherheitsschalters der Reihenschaltung gemäß Figur 1d für den Anschluss an das Auswertegerät.

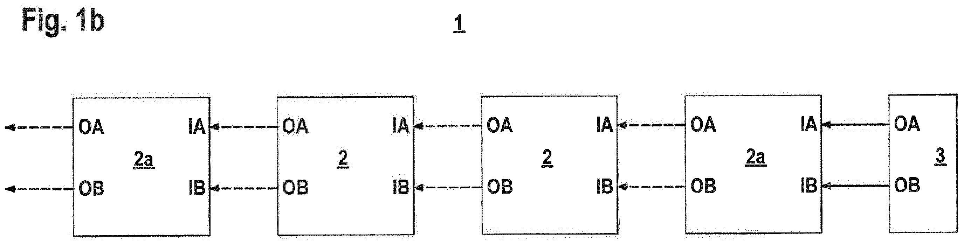

- Figur 1b:: Erstes Beispiel einer Reihenschaltung mit einer Anordnung von Sicherheitsschaltern und Standard-Sicherheitsschaltern.

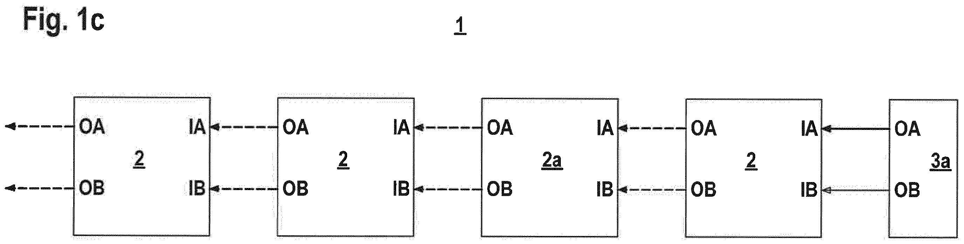

- Figur 1c:: Zweites Beispiel einer Reihenschaltung mit einer Anordnung von Sicherheitsschaltern und Standard-Sicherheitsschaltern.

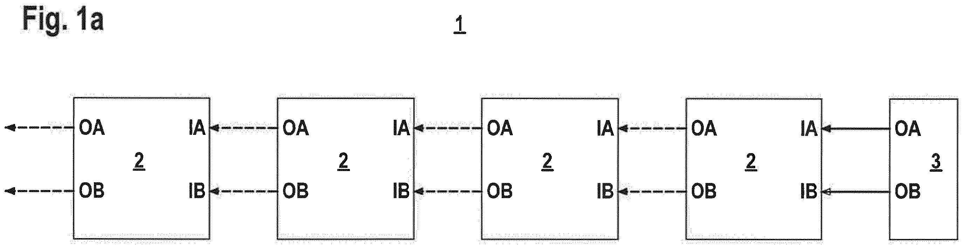

Figur 1a zeigt ein erstes Beispiel einer Reihenschaltung 1 bestehend aus einer Mehrfachanordnung von erfindungsgemäßen Sicherheitsschaltern 2.

Die identisch aufgebauten Sicherheitsschalter 2 sind im vorliegenden Fall transpondergesteuerte Schalter, wobei anhand von registrierten Transpondersignalen beispielsweise überwacht werden kann, ob eine Tür als Zugang zu einem Gefahrenbereich einer Maschine geschlossen, das heißt verriegelt ist, oder nicht. Hierzu werden im Sicherheitsschalter 2 Ein- und Ausgangssignale fehlersicher verarbeitet.

Jeder Sicherheitsschalter 2 weist eine redundante Ausgangsstruktur in Form von zwei Ausgängen OA, OB und eine redundante Eingangsstruktur in Form von zwei Eingängen IA, IB auf Damit weist der Sicherheitsschalter 2 eine zweikanalige Struktur mit Kanälen A (Ausgang OA, Eingang IA) und B (Ausgang OB, Eingang IB) auf.

Der erste Sicherheitsschalter 2 der Reihenschaltung 1, in Figur 1a rechts, ist an einen Brückenstecker 3 angeschlossen, der eine Terminierung der Reihenschaltung 1 bildet. Der letzte Sicherheitsschalter 2, in Figur 1a links, ist an eine nicht dargestellte Steuerung angeschlossen. Diese Steuerung ist zum Beispiel von einer Sicherheitssteuerung gebildet, die eine Maschine steuert, deren Gefahrenbereich mit den Sicherheitsschaltern 2 der Reihenschaltung 1 überwacht wird.

Jeder Sicherheitsschalter 2 generiert abhängig von den registrierten Transpondersignalen ein über die Ausgänge OA, OB ausgebbares Schaltsignal, das zwei Schaltzustände aufweist. Ein erster Schaltzustand ist der eingeschaltete Zustand, entsprechend einer aktiven Sicherheitsbedingung beziehungsweise einem Freigabesignal. Dieser Schaltzustand wird eingenommen, wenn kein gefahrbringender Zustand vorliegt, beispielsweise dann, wenn mit dem Sicherheitsschalter 2 detektiert wird, dass die überwachte Tür geschlossen ist. Der zweite Zustand ist der ausgeschaltete Zustand, entsprechend einer nicht aktiven Sicherheitsbedingung. Dieser Schaltzustand wird eingenommen, wenn ein gefahrbringender Zustand detektiert wird, beispielsweise dann, wenn mit dem Sicherheitsschalter 2 detektiert wird, dass die überwachte Tür offen ist.

Im einfachsten Fall besteht die Reihenschaltung 1 aus nur einem Sicherheitsschalter 2. Dann wird die Steuerung nur durch das in diesem Sicherheitsschalter 2 generierte Schaltsignal gesteuert.

Bei der Reihenschaltung 1 der Figur 1a sind vier Sicherheitsschalter 2 in der Reihenschaltung 1 vorgesehen. Generell kann auch eine andere Anzahl von Sicherheitsschaltern 2 vorgesehen sein. Insbesondere können auch mehr als vier Sicherheitsschalter 2 die Reihenschaltung 1 bilden. Die Funktionsweise der Reihenschaltung 1 ist dann derart, dass der erste Sicherheitsschalter 2 nur abhängig von seinen Transpondersignalen sein Schaltsignal generiert und an den Ausgängen OA, OB ausgibt. Die weiteren Sicherheitsschalter 2 generieren ihr Schaltsignal abhängig von den Transpondersignalen und den an den Eingängen IA, IB anstehenden Signalen. Generiert ein Sicherheitsschalter 2 ein Schaltsignal mit dem Schaltzustand "ausgeschalteter Zustand", entsprechend einem gefahrbringenden Zustand, so wird dieses Schaltsignal durch die nachfolgenden Sicherheitsschalter 2 bis zur Steuerung durchgeschleift, so dass die Steuerung die Maschine in den sicheren Zustand überführt, das heißt abschaltet. Diese Vorgehensweise gilt gleichermaßen für alle nachfolgenden Ausführungsbeispiele von Reihenschaltungen 1.

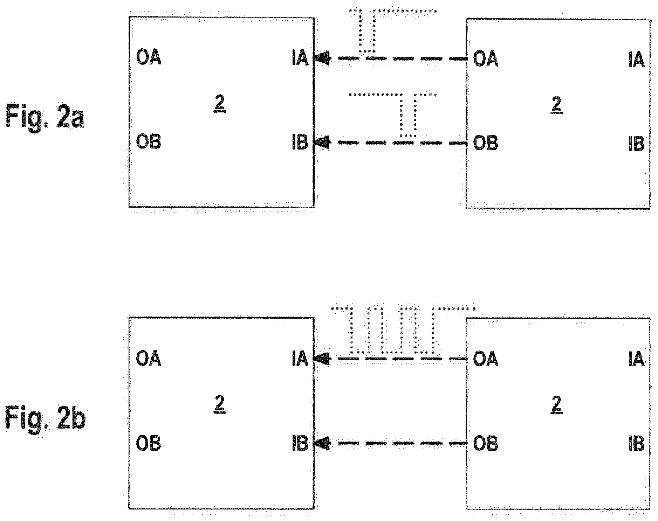

Jeder Sicherheitsschalter 2 generiert Testpulse, die, wie in Figur 2a dargestellt, von einem Sicherheitsschalter 2 zum nächsten Sicherheitsschalter 2 übertragen werden.

Wie Figur 2b zeigt, gibt jeder Sicherheitsschalter 2 auch Testpattern, das heißt Pulsfolgen bestehend aus einer Anzahl von Einzelpulsen, aus. Die Pulsdauer der Einzelpulse und Pausen zwischen den Einzelpulsen können gleich oder unterschiedlich sein.

Durch Einlesen von Testpattern kann ein Sicherheitsschalter 2 die jeweilige Betriebsart erkennen, so dass der Sicherheitsschalter 2 selbsttätig seine Betriebsart entsprechend einstellen kann.

Weiterhin kann anhand der Testpattern die Position eines Sicherheitsschalters 2 in der Reihenschaltung 1 bestimmt werden, wie eingangs beschrieben.

Bei den Sicherheitsschaltern 2 der Reihenschaltung 1 gemäß Figur 1a gibt jeder Sicherheitsschalter 2 Testpulse nur im eingeschalteten Zustand aus. Damit ist es möglich, einen Sicherheitsschalter 2 während des Betriebs der Reihenschaltung 1 auszuwechseln. Wird ein Sicherheitsschalter 2 aus der Reihenschaltung 1 entnommen, so erhält der nächste Sicherheitsschalter 2 kein Spannungssignal, wodurch dessen Ausgänge OA, OB in den ausgeschalteten Zustand und die Reihenschaltung 1 in den sicheren Zustand übergeht. Da im ausgeschalteten Zustand keine Testpulse von den Sicherheitsschaltern 2 auszugeben sind, bleibt die Reihenschaltung 1 funktionsfähig. Wird dann der neue Sicherheitsschalter 2 eingesetzt, wartet dieser bis er vom vorigen Sicherheitsschalter 2 die nächsten Testpattern erhält. Darauf kennt der Sicherheitsschalter 2 seine Position in der Reihenschaltung 1 und kann somit die Kommunikation in der Reihe aufnehmen.

Figur 1d zeigt eine Erweiterung der Ausführungsform der Reihenschaltung 1 gemäß Figur 1a. Bei der Reihenschaltung 1 der Figur 1d sind die Ausgänge OA, OB des letzten Sicherheitsschalters 2 nicht direkt auf die Steuerung, sondern auf Eingänge IA, IB eines Auswertegeräts 4 geführt.

Von dem Auswertegerät 4 führen weitere Kommunikationsleitungen 5, 6 eines Kommunikationssystems zu den Sicherheitsschaltern 2 und zum Brückenstecker 3.

Zum Anschluss an das Kommunikationssystem weist jeder Sicherheitsschalter 2 die in Figur 3 dargestellte Schaltungsanordnung auf. Diese umfasst einen Microcontroller 7, einen Ausgangstreiber 8, einen Treiber 9 und eine Resetschaltung 10. Der Betreiber kann über einen Funktionsumschalter 11 durch den Microcontroller 7 aktiviert werden. Weiterhin ist der Microcontroller 7 mit dem Treiber 9 über Leitungen 12, 13 verbunden. Dem Ausgangstreiber 8 und der Resetschaltung 10 sind weitere Schalter 14, 15 zugeordnet. Mit dieser Schaltungsanordnung kann die Kommunikation über das Kommunikationssystem aktiviert werden, falls das Auswertegerät 4 an die Reihenschaltung 1 angeschaltet ist. Über das Kommunikationssystem werden nicht sicherheitsrelevante Daten übertragen, beispielsweise Statusmeldungen oder Fehlercodes der Sicherheitsschalter 2. Die Kommunikation mit den Kommunikationsteilnehmern erfolgt über den Meldeausgang 16 und den Reseteingang 17 der Schaltungsanordnung.

Bei der Kommunikation über das Kommunikationssystem werden die Sicherheitsschalter 2 unter Positionen angesprochen. Diese Positionen werden bei der Inbetriebnahme des Kommunikationssystems, insbesondere dem Power-UP der Reihenschaltung 1 vergeben.

Die Vergabe der Positionen der Sicherheitsschalter 2 erfolgt über das Auswertegerät 4. Dabei können einerseits die Kommunikationsleitungen 5, 6 zur Vergabe der Positionen genutzt werden. Andererseits können Positionsinformationen über die Eingänge IA, IB des Auswertegeräts 4 an die angeschlossenen Sicherheitsschaltern 2 ausgegeben werden.

Alternativ kann durch das Weiterleiten der Testpattern die Vergabe der Positionen der Sicherheitsschalter 2 erfolgen, die dann das Auswertegerät 4 erhält um die Sicherheitsschalter ansprechen zu können.

Figur 1b zeigt ein Ausführungsbeispiel einer Reihenschaltung 1, in welcher neben den erfindungsgemäßen Sicherheitsschaltern 2 auch Standard-Sicherheitsschalter 2a vorgesehen sind.

Ein Standard-Sicherheitsschalter 2a ist wie der erfindungsgemäße Sicherheitsschalter 2 beispielsweise ein transpondergesteuerter Schalter. Der Standard-Sicherheitsschalter 2a unterscheidet sich vom erfindungsgemäßen Sicherheitsschalter 2 dadurch, dass er in jedem Schaltzustand des Sicherheitsschalters 2 Testpulse emittiert.

Bei der Reihenschaltung 1 der Figur 1b ist das erste und letzte Gerät der Reihe von einem Standard-Sicherheitsschalter 2a gebildet, die übrigen Geräte sind von Sicherheitsschaltern 2 gebildet.

In diesem Fall gibt der Brückenstecker 3 wieder einen festen Spannungspegel vor, der einem High-Pegel an den Eingängen IA, IB des ersten Geräts entspricht. Der das Erstgerät bildende Standard-Sicherheitsschalter 2a erkennt dadurch wieder, dass er das erste Gerät der Reihe ist. Dieser Standard-Sicherheitsschalter 2a gibt dann während des Power-UP Testpulse an das nächste Gerät aus, das von einem Sicherheitsschalter 2 gebildet ist. Dieser Sicherheitsschalter 2 erkennt die Testpulse des Standard-Sicherheitsschalters 2a und wechselt dadurch in einen Kompatibilitätsmodus. Dasselbe gilt für den nachfolgenden Sicherheitsschalter 2.

Im Kompatibilitätsmodus verhalten sich alle Sicherheitsschalter 2 der Reihenschaltung 1 wie Standard-Sicherheitsschalter 2a, das heißt die Sicherheitsschalter 2 der Reihenschaltung 1 geben Testpulse wie Standard-Sicherheitsschalter 2a aus, und zwar unabhängig vom Schaltzustand des Schaltsignals des Sicherheitsschalters 2.

Figur 1c zeigt eine Variante der Reihenschaltung 1 gemäß Figur 1b. Bei der Reihenschaltung 1 gemäß Figur 1c sind das erste, zweite und vierte Gerät der Reihenschaltung 1 Sicherheitsschalter 2. Das dritte Gerät ist von einem Standard-Sicherheitsschalter 2a gebildet.

Da in der Reihenschaltung 1 gemäß Figur 1c ein Standard-Sicherheitsschalter 2a angeordnet ist, werden die weiteren Sicherheitsschalter 2 der Reihenschaltung 1 entsprechend der Ausführungsform gemäß Figur 1b im Kompatibilitätsmodus betrieben, das heißt sie verhalten sich wie Standard-Sicherheitsschalter 2a. Da bei der Reihenschaltung 1 gemäß Figur 1c das Erstgerät kein Standard-Sicherheitsschalter 2a ist, sondern ein Sicherheitsschalter 2, können die Testpulse dieses Erstgeräts nicht genutzt werden, um die Sicherheitsschalter 2 in den Kompatibilitätsmodus umzuschalten. Daher ist im vorliegenden Fall als Terminierung der Reihenschaltung 1 ein aktiver Brückenstecker 3a vorgesehen. Dieser aktive Brückenstecker 3a erzeugt Testpulse eines Standard-Sicherheitsschalters 2a und gibt diese in den das Erstgerät bildenden Sicherheitsschalter 2 ein, so dass dieser (und danach alle weiteren Sicherheitsschalter 2) in den Kompatibilitätsmodus wechseln kann.

### Bezugszeichenliste

- (1): Reihenschaltung
- (2): Sicherheitsschalter
- (2a): Standard-Sicherheitsschalter
- (3): Brückenstecker
- (3a): aktiver Brückenstecker
- (4): Auswertegerät
- (5,6): Kommunikationsleitung
- (7): Microcontroller
- (8): Ausgangstreiber
- (9): Treiber
- (10): Resetschaltung
- (11): Funktionsumschalter
- (12, 13): Leitung
- (14, 15): Schalter
- (16): Meldeausgang
- (17): Reseteingang
- (OA, OB): Ausgang
- (IA, IB): Eingang

## Patentansprüche

1. Sicherheitsschalter (2) mit einer redundanten Eingangsstruktur und mit einer redundanten Ausgangsstruktur, der für eine Integration in einer Reihenschaltung (1) von Sicherheitsschaltern (2) ausgebildet ist, wobei der Sicherheitsschalter (2) Mittel zur Erkennung und Einstellung der Betriebsart innerhalb der Reihenschaltung (1) aufweist, und wobei der Sicherheitsschalter (2) für einen Austausch in der Reihenschaltung (1) während deren Betriebs ausgebildet ist, dass der Sicherheitsschalter (2) ein binäres Schaltsignal generiert, welches über die redundante Ausgangsstruktur ausgegeben wird, wobei das Schaltsignal als ersten Schaltzustand einen eingeschalteten Zustand entsprechend einer aktiven Sicherheitsbedingung beziehungsweise einem Freigabesignal und als einen zweiten Schaltzustand einen ausgeschalteten Zustand entsprechend einer nicht aktiven Sicherheitsbedingung aufweist, und dass nur im eingeschalteten Zustand Testpulse über die redundante Ausgangsstruktur ausgegeben werden, wobei mit den Testpulsen die Schaltfähigkeit der redundanten Ausgangsstruktur getestet wird, und dass die redundante Ausgangsstruktur von zwei Ausgängen (OA, OB) und die redundante Eingangsstruktur von zwei Eingängen (IA, IB) gebildet ist, wobei ein erster Ausgang und ein erster Eingang einen ersten Kanal bilden und ein zweiter Eingang und ein zweiter Ausgang einen zweiten Kanal bilden, und dass durch Rücklesen der Testpulse an einem Ausgang eines Kanals auf den jeweils anderen Kanal die Schaltfähigkeit dieses Ausgangs getestet wird.

2. Sicherheitsschalter nach Anspruch 1, **dadurch gekennzeichnet, dass** dieser ausgebildet ist, über die redundante Ausgangsstruktur Testpattern auszugeben und über die redundante Eingangsstruktur Testpattern zu empfangen.

3. Sicherheitsschalter nach Anspruch 2, **dadurch gekennzeichnet, dass** Testpattern während eines Power-UP und ansonsten nur im eingeschalteten Zustand des Sicherheitsschalters (2) ausgegeben werden.

4. Sicherheitsschalter nach einem der Ansprüche 2 oder 3, **dadurch gekennzeichnet, dass** jedes Testpattern aus einer Folge von Einzelpulsen besteht.

5. Sicherheitsschalter nach einem der Ansprüche 2 bis 4, **dadurch gekennzeichnet, dass** über Testpattern die Betriebsart des Sicherheitsschalters (2) vorgebbar ist.

6. Sicherheitsschalter nach einem der Ansprüche 2 bis 5, **dadurch gekennzeichnet, dass** über Testpattern die Position eines Sicherheitsschalters (2) in einer Reihenschaltung (1) vorgebbar ist.

7. Sicherheitsschalter nach einem der Ansprüche 1 bis 6, **dadurch gekennzeichnet, dass** dieser Mittel zur Parametrierung aufweist.

8. Reihenschaltung (1) mit mehreren Sicherheitsschaltern (2), wobei die redundante Ausgangsstruktur eines Sicherheitsschalters (2) mit der redundanten Eingangsstruktur des nächsten Sicherheitsschalters (2) verknüpft ist, und wobei in der Reihenschaltung (1) wenigstens ein Sicherheitsschalter (2) gemäß den Ansprüchen 1 bis 7 vorhanden ist.

9. Reihenschaltung nach Anspruch 8, **dadurch gekennzeichnet, dass** die redundante Eingangsstruktur des ersten Sicherheitsschalters (2) der Reihenschaltung (1) mit einem Brückenstecker (3, 3a) verbunden ist, und dass das Schaltsignal des letzten Sicherheitsschalters (2) der Reihenschaltung (1) über dessen redundante Ausgangsstruktur einer Steuerung zugeführt ist.

10. Reihenschaltung nach Anspruch 9, **dadurch gekennzeichnet, dass** für den Fall, dass einer der Sicherheitsschalter (2) über seine redundante Ausgangsstruktur ein Schaltsignal mit dem Schaltzustand "ausgeschalteter Zustand" ausgibt, dieser Schaltzustand über die nachfolgenden Sicherheitsschalter (2) der Reihenschaltung (1) zur Steuerung durchgeschleift wird.

11. Reihenschaltung nach Anspruch 8 bis 10, **dadurch gekennzeichnet, dass** in dieser neben einem oder mehreren Sicherheitsschaltern (2) wenigstens ein Standard-Sicherheitsschalter (2a) vorhanden ist, wobei sich der Standard-Sicherheitsschalters (2a) von dem Sicherheitsschalter (2) dadurch unterscheidet, dass dieser Testpulse aussendet, wenn sich das Schaltsignal im Schaltzustand "eingeschalteter Zustand" befindet und wenn sich das Schaltsignal im Schaltzustand "ausgeschalteter Zustand" befindet, und wobei der Standard-Sicherheitsschalter (2a) nicht während des Betriebs der Reihenschaltung (1) austauschbar ist.

12. Reihenschaltung nach Anspruch 11, **dadurch gekennzeichnet, dass** der oder die Sicherheitsschalter (2), die mit wenigstens einem Standard-Sicherheitsschalter (2a) in einer Reihenschaltung (1) angeordnet sind, in einem Kompatibilitätsmodus betrieben sind, in welchem sich diese wie Standard-Sicherheitsschalter (2a) verhalten.

13. Reihenschaltung nach einem der Ansprüche 8 bis 12, **dadurch gekennzeichnet, dass** die Betriebsart der Sicherheitsschalter (2) in der Reihenschaltung (1) selbsttätig während eines Power-UP festgelegt wird.

14. Reihenschaltung nach einem der Ansprüche 11 bis 13, **dadurch gekennzeichnet, dass** für den Fall, dass ein Standard-Sicherheitsschalter (2a) als Erstgerät in der Reihenschaltung (1) vorhanden ist, der oder jeder nachgeordnete Sicherheitsschalter (2) anhand der von diesem Standard-Sicherheitsschalter (2a) generierten Testpulse im Kompatibilitätsmodus betrieben ist.

15. Reihenschaltung nach Anspruch 14, **dadurch gekennzeichnet, dass** der dem Erstgerät zugeordnete Brückenstecker (3) ein Spannungsniveau vorgibt, welches einem "High" Pegel der Eingänge (IA, IB) des Standard-Sicherheitsschalters (2a) entspricht.

16. Reihenschaltung nach einem der Ansprüche 11 bis 14, **dadurch gekennzeichnet, dass** für den Fall, dass ein Sicherheitsschalter (2) als Erstgerät in der Reihenschaltung (1) vorgesehen ist, diesem ein aktiver Brückenstecker (3a) zugeordnet ist, welcher Testpulse eines Standard-Sicherheitsschalters (2a) ausgibt, wobei durch Erfassen dieser Testpulse die Sicherheitsschalter (2) im Kompatibilitätsmodus betrieben sind.

17. Reihenschaltung nach einem der Ansprüche 8 bis 11, **dadurch gekennzeichnet, dass** in dieser keine Standard-Sicherheitsschalter (2a), sondern nur Sicherheitsschalter (2) vorgesehen sind, und dass ein Sicherheitsschalter (2) während des Betriebs der Reihenschaltung (1) austauschbar ist.

18. Reihenschaltung nach einem der Ansprüche 11 bis 17, **dadurch gekennzeichnet, dass** das Schaltsignal des letzten Sicherheitsschalters (2) der Reihenschaltung (1) direkt der Steuerung zugeführt ist.

19. Reihenschaltung nach einem der Ansprüche 11 bis 18, **dadurch gekennzeichnet, dass** das Schaltsignal des letzten Sicherheitsschalters (2) der Reihenschaltung (1) über ein Auswertegerät (4) der Steuerung zugeführt ist, wobei hierzu die Ausgänge (OA, OB) des letzten Sicherheitsschalters (2) an jeweils einen Eingang des Auswertegeräts (4) angeschlossen sind.

20. Reihenschaltung nach Anspruch 19, **dadurch gekennzeichnet, dass** das Auswertegerät (4) über ein Kommunikationssystem mit den Sicherheitsschaltern (2) der Reihenschaltung (1) verbunden ist.

## Claims

1. Safety switch (2) with a redundant input structure and with a redundant output structure, which is configured for integration in a series circuit (1) of safety switches (2), wherein the safety switch (2) comprises means for recognition and setting of the mode of operation within the series circuit (1), wherein the safety switch (2) is configured for exchange in the series circuit (1) during operation thereof, wherein the safety switch (2) generates a binary switching signal which is output by way of the redundant output structure, wherein the switching signal has as first switching state a switched-on state corresponding with an active safety condition or a release signal and as second switching state a switched-off state corresponding with a non-active safety condition, wherein test pulses are output by way of the redundant output structure only in the switched-on state, wherein the switching capability of the redundant output structure is tested by the test pulses, wherein the redundant output structure is formed by two outputs (OA, OB) and the redundant input structure by two inputs (IA, IB), wherein a first output and a first input form a first channel and a second input and a second output form a second channel, and wherein through reading back the test pulses at an output of one channel to the respective other channel the switching capability of this output is tested.

2. Safety switch according to claim 1, **characterised in that** this is configured to output test patterns by way of the redundant output structure and to receive test patterns by way of the redundant input structure.

3. Safety switch according to claim 2, **characterised in that** test patterns are output during a power-up and otherwise only in the switched-on state of the safety switch (2).

4. Safety switch according to one of claims 2 and 3, **characterised in that** each test pattern consists of a train of individual pulses.

5. Safety switch according to any one of claims 2 to 4, **characterised in that** the mode of operation of the safety switch (2) is predeterminable by way of test patterns.

6. Safety switch according to any one of claims 2 to 5, **characterised in that** the position of a safety switch (2) in a series circuit (1) is predeterminable by way of test patterns.

7. Safety switch according to any one of claims 1 to 6, **characterised in that** this comprises means for parameterisation.

8. Series circuit (1) with a plurality of safety switches (2), wherein the redundant output structure of a safety switch (2) is linked with the redundant input structure of the next safety switch (2) and wherein at least one safety switch (2) according to any one of claims 1 to 7 is present in the series circuit (1).

9. Series circuit according to claim 8, **characterised in that** the redundant input structure of the first safety switch (2) of the series circuit (1) is connected with a bridge plug (3, 3a) and that the switching signal of the last safety switch (2) of the series circuit (1) is fed by way of this redundant output structure to a control.

10. Series circuit according to claim 9, **characterised in that** if one of the safety switches (2) outputs a switching signal with the switching state 'switched-off state' by way of its redundant output structure this switching state is looped through to the control by way of the succeeding safety switch (2) of the series circuit (1).

11. Series circuit according to any one of claims 8 to 10, **characterised in that** at least one standard safety switch (2a) is present therein in addition to one or more safety switches (2), wherein the standard safety switch (2a) differs from the safety switch (2) **in that** this issues test pulses when the switching signal is in the switching state 'switched-on state' and when the switching signal is in the switching state 'switched-off state' and wherein the standard safety switch (2a) is not exchangeable during operation of the series circuit (1).

12. Series circuit according to claim 11, **characterised in that** the safety switch or switches (2) arranged together with at least one standard safety switch (2a) in a series circuit (1) is or are operated in a compatibility mode in which this or these behave as a standard safety switch (2a).

13. Series circuit according to any one of claims 8 to 12, **characterised in that** the mode of operation of the safety switch (2) in the series circuit (1) is automatically fixed during a power-up.

14. Series circuit according to any one of claims 11 to 13, **characterised in that** if a standard safety switch (2a) is present as first device in the series circuit (1) the or each succeeding safety switch (2) is operated in the compatibility mode on the basis of the test pulses generated by this standard safety switch (2a).

15. Series circuit according to claim 14, **characterised in that** the bridge plug (3) associated with the first device predetermines a voltage level corresponding with a 'high' level of the inputs (IA, IB) of the standard safety switch (2a).

16. Series circuit according to any one of claims 11 to 14, **characterised in that** if a safety switch (2) is provided as first device in the series circuit (1) an active bridge plug (3a) which outputs test pulses of a standard safety switch (2a) is associated therewith, wherein through detection of these test pulses the safety switches (2) are operated in the compatibility mode.

17. Series circuit according to any one of claims 8 to 11, **characterised in that** no standard safety switches (2a), but only safety switches (2), are provided therein and that a safety switch (2) is exchangeable during operation of the series circuit (1).

18. Series circuit according to any one of claims 11 to 17, **characterised in that** the switching signal of the last safety switch (2) of the series circuit (1) is fed directly to the control.

19. Series circuit according to any one of claims 11 to 18, **characterised in that** the switching signal of the last safety switch (2) of the series circuit (1) is fed to the control by way of an evaluating device (4), wherein for that purpose the outputs (OA, OB) of the last safety switch (2) are each connected with a respective input of the evaluating device (4).

20. Series circuit according to claim 19, **characterised in that** the evaluating device (4) is connected with the safety switches (2) of the series circuit (1) by way of a communication system.

## Revendications

1. Interrupteur de sécurité (2) comportant une structure d'entrée redondante et une structure de sortie redondante, qui est conçu pour être intégré dans un circuit série (1) d'interrupteurs de sécurité (2), l'interrupteur de sécurité (2) présentant des moyens pour détecter et régler le mode de fonctionnement à l'intérieur du circuit série (1) et l'interrupteur de sécurité (2) étant conçu pour être remplacé dans le circuit série (1) pendant son fonctionnement, dans lequel l'interrupteur de sécurité (2) génère un signal de commutation binaire qui est émis par la structure de sortie redondante, le signal de commutation ayant comme premier état de commutation un état activé correspondant à une condition de sécurité active ou à un signal de validation et, comme deuxième état de commutation, un état désactivé correspondant à une condition de sécurité non active, et dans lequel des impulsions de test ne sont émises par la structure de sortie redondante que dans l'état activé, les impulsions de test servant à tester la capacité de commutation de la structure de sortie redondante, et dans lequel la structure de sortie redondante est formée par deux sorties (OA, OB) et la structure d'entrée redondante par deux entrées (IA, IB), une première sortie et une première entrée formant un premier canal et une deuxième entrée et une deuxième sortie formant un deuxième canal, et dans lequel la relecture des impulsions de test à une sortie d'un canal sur l'autre canal respectif permet de tester la capacité de commutation de cette sortie.

2. Interrupteur de sécurité selon la revendication 1, **caractérisé en ce qu'**il est conçu pour émettre des motifs de test par la structure de sortie redondante et pour recevoir des motifs de test par la structure d'entrée redondante.

3. Interrupteur de sécurité selon la revendication 2, **caractérisé en ce que** les motifs de test sont émis pendant une mise sous tension et autrement seulement dans l'état activé de l'interrupteur de sécurité (2).

4. Interrupteur de sécurité selon l'une des revendications 2 ou 3, **caractérisé en ce que** chaque motif de test consiste en une suite d'impulsions individuelles.

5. Interrupteur de sécurité selon l'une des revendications 2 à 4, **caractérisé en ce que** des motifs de test permettent de prescrire le mode de fonctionnement de l'interrupteur de sécurité (2).

6. Interrupteur de sécurité selon l'une des revendications 2 à 5, **caractérisé en ce que** des motifs de test permettent de prescrire la position d'un interrupteur de sécurité (2) dans un circuit série (1).

7. Interrupteur de sécurité selon l'une des revendications 1 à 6, **caractérisé en ce qu'**il présente des moyens de paramétrage.

8. Circuit série (1) comportant plusieurs interrupteurs de sécurité (2), dans lequel la structure de sortie redondante d'un interrupteur de sécurité (2) est reliée à la structure d'entrée redondante de l'interrupteur de sécurité (2) suivant et dans lequel au moins un interrupteur de sécurité (2) selon les revendications 1 à 7 est présent dans le circuit série (1).

9. Circuit série selon la revendication 8, **caractérisé en ce que** la structure d'entrée redondante du premier interrupteur de sécurité (2) du circuit série (1) est reliée à un connecteur en pont (3, 3a) et que le signal de commutation du dernier interrupteur de sécurité (2) du circuit série (1) est amené à une unité de commande par sa structure de sortie redondante.

10. Circuit série selon la revendication 9, **caractérisé en ce que**, dans le cas où l'un des interrupteurs de sécurité (2) émet, par sa structure de sortie redondante, un signal de commutation présentant l'état de commutation « état désactivé », cet état de commutation est retransmis à l'unité de commande par les interrupteurs de sécurité (2) suivants du circuit série (1).

11. Circuit série selon les revendications 8 à 10, **caractérisé en ce qu'**en plus d'un ou plusieurs interrupteurs de sécurité (2), au moins un interrupteur de sécurité standard (2a) y est présent, dans lequel l'interrupteur de sécurité standard (2a) se distingue de l'interrupteur de sécurité (2) **en ce qu'**il émet des impulsions de test lorsque le signal de commutation est dans l'état de commutation « état activé » et lorsque le signal de commutation est dans l'état de commutation « état désactivé », et dans lequel l'interrupteur de sécurité standard (2a) n'est pas remplaçable pendant le fonctionnement du circuit série (1).

12. Circuit série selon la revendication 11, **caractérisé en ce que** le ou les interrupteurs de sécurité (2) qui sont disposés avec au moins un interrupteur de sécurité standard (2a) dans un circuit série (1) fonctionnent dans un mode de compatibilité dans lequel ils se comportent comme des interrupteurs de sécurité standard (2a).

13. Circuit série selon l'une des revendications 8 à 12, **caractérisé en ce que** le mode de fonctionnement des interrupteurs de sécurité (2) dans le circuit série (1) est défini automatiquement lors d'une mise sous tension.

14. Circuit série selon l'une des revendications 11 à 13, **caractérisé en ce que**, dans le cas où un interrupteur de sécurité standard (2a) est présent en tant que premier dispositif dans le circuit série (1), le ou chaque interrupteur de sécurité (2) disposé en aval fonctionne en mode de compatibilité du fait des impulsions de test générées par cet interrupteur de sécurité standard (2a).

15. Circuit série selon la revendication 14, **caractérisé en ce que** le connecteur en pont (3) associé au premier dispositif prescrit un niveau de tension qui correspond à un niveau « haut » des entrées (IA, IB) de l'interrupteur de sécurité standard (2a).

16. Circuit série selon l'une des revendications 11 à 14, **caractérisé en ce que**, dans le cas où un interrupteur de sécurité (2) est prévu en tant que premier dispositif dans le circuit série (1), un connecteur en pont actif (3a) lui est associé, qui émet des impulsions de test d'un interrupteur de sécurité standard (2a), les interrupteurs de sécurité (2) fonctionnant en mode de compatibilité par détection de ces impulsions de test.

17. Circuit série selon l'une des revendications 8 à 11, **caractérisé en ce qu'**il n'y est pas prévu d'interrupteurs de sécurité standard (2a), mais uniquement des interrupteurs de sécurité (2), et qu'un interrupteur de sécurité (2) est remplaçable pendant le fonctionnement du circuit série (1).

18. Circuit série selon l'une des revendications 11 à 17, **caractérisé en ce que** le signal de commutation du dernier interrupteur de sécurité (2) du circuit série (1) est amené directement à l'unité de commande.

19. Circuit série selon l'une des revendications 11 à 18, **caractérisé en ce que** le signal de commutation du dernier interrupteur de sécurité (2) du circuit série (1) est amené à l'unité de commande par l'intermédiaire d'un dispositif d'évaluation (4), les sorties (OA, OB) du dernier interrupteur de sécurité (2) étant à cet effet connectées à une entrée respective du dispositif d'évaluation (4).

20. Circuit série selon la revendication 19, **caractérisé en ce que** le dispositif d'évaluation (4) est relié aux interrupteurs de sécurité (2) du circuit série (1) par un système de communication.
